# FASCICULE DE BREVET EUROPEEN

(11) **EP 2 412 613 B1**
(45) Date de publication et mention de la délivrance du brevet: **24.04.2013**
(21) Numéro de dépôt: 11174504.8
(22) Date de dépôt: 19.07.2011
(51) Int. Cl.: B62D 33/04, B60P 3/20

(54) **Module de carrosserie pour véhicule frigorifique comprenant un panneau d'isolation sous vide, et procédé de fabrication associé**
Karosseriemodul für ein Kühlfahrzeug mit Vakuum-Isolierpaneel, und entsprechendes Herstellungsverfahren
Body module for refrigerated vehicles including a vacuum insulation panel, and associated manufacturing method

(30) Priorité: 27.07.2010 FR 1056157
(43) Date de publication de la demande: 01.02.2012
(73) Titulaire: Jean Chereau SAS, 50220 Ducey (FR)
(72) Inventeur: Chaillou, Frédéric, 35133 St Sauveur des Landes (FR); Courteille, Benoit, 50300 Avranches (FR); Amelot, Frédéric, 35760 Saint Gregoire (FR)
(74) Mandataire: Delprat, Olivier

(56) Documents cités:
- EP-A2- 1 045 079

## Description

La présente invention concerne le domaine général des véhicules frigorifiques, et notamment des véhicules frigorifiques utilisés pour le transport de marchandises.

Plus particulièrement, la présente invention concerne un module de carrosserie utilisé pour la fabrication d'une carrosserie frigorifique destinée à être montée par exemple sur le châssis d'un véhicule routier de transport tel qu'un camion, une semi-remorque ou sur une remorque.

Le document EP 1 045 079 décrit un module de carrosserie selon le préambule de la revendication 1.

De telles carrosseries frigorifiques permettent de transporter des marchandises ou des denrées périssables nécessitant d'être maintenues à une température constante, généralement inférieure à la température extérieure. Dans ce but, les carrosseries comprennent des groupes frigorifiques pour maintenir, dans un espace intérieur de chargement, la température adaptée à la conservation des marchandises. Classiquement, les parois d'une carrosserie frigorifique sont formées à partir de panneaux composites multicouches.

Pour obtenir une carrosserie frigorifique présentant de bonnes propriétés d'isolation thermique, il est connu d'utiliser des panneaux d'isolation sous vide comportant un matériau isolant poreux formant une âme qui est encapsulée à l'intérieur d'une membrane étanche à l'air et à la vapeur.

La demande de brevet EP-A2-1 785 337 décrit par exemple une carrosserie frigorifique dans laquelle chacune de ses parois comprend des panneaux d'isolation sous vide, des couches de recouvrement intérieure et extérieure pourvues de fibres de verre, une couche de mousse en polyuréthane prévue entre les panneaux d'isolation sous vide et la couche de recouvrement extérieure, des structures ou plaques de soutien intercalées entre les panneaux d'isolation adjacents, et une pluralité de couches de colle pour fixer entre eux les panneaux d'isolation, la couche de mousse, les plaques de soutien ainsi que les couches de recouvrement.

Lors de l'assemblage de ces différents éléments pour former chaque paroi de la carrosserie, la manipulation des panneaux d'isolation sous vide est délicate car ces panneaux sont relativement souples et fragiles. En outre, les membranes d'encapsulation des panneaux d'isolation peuvent être détériorées lors de cette manipulation, par exemple percées ou encore déchirées. Ceci réduit fortement les performances énergétiques de la carrosserie frigorifique. Une détérioration des membranes d'encapsulation peut également se produire lorsque les panneaux d'isolation sous vide sont enduits de colle.

Par ailleurs, dans ce document, pour obtenir une paroi de carrosserie frigorifique suffisamment rigide, il est nécessaire d'utiliser les structures ou plaques de soutien reliant les panneaux d'isolation sous vide. Ceci augmente le nombre d'éléments à assembler et le temps de fabrication d'une paroi de carrosserie.

La présente invention vise à remédier à ces inconvénients.

Plus particulièrement, la présente invention vise à prévoir un module de carrosserie pour véhicule frigorifique, notamment pour véhicule routier de transport de marchandises, présentant à la fois de bonnes propriétés d'isolation thermique et de résistance mécanique aux chocs, ainsi qu'une bonne résistance à la flexion et à la torsion.

La présente invention vise également à prévoir un module de carrosserie pouvant être aisément manipulé avec un risque limité de détérioration.

Dans un mode de réalisation, un module de carrosserie pour véhicule frigorifique, notamment pour véhicule routier de transport de marchandises, comprend au moins un élément d'isolation sous vide pourvu d'une âme et d'une membrane d'encapsulation de ladite âme, et une enveloppe de protection surmoulée sur la membrane d'encapsulation de manière à noyer entièrement l'élément d'isolation sous vide. L'enveloppe de protection est réalisée dans un matériau plus rigide que le matériau de la membrane d'encapsulation de l'élément d'isolation sous vide.

Lors de la fabrication d'un panneau de carrosserie frigorifique, le module peut être transporté et manipulé sans risque de détérioration de l'élément d'isolation sous vide. En effet, l'enveloppe de protection forme un enrobage protégeant l'élément d'isolation en cas de chocs du module hybride contre un élément extérieur. L'enveloppe de protection recouvre en totalité l'élément d'isolation sous vide. L'enveloppe de protection permet d'obtenir un module relativement rigide facile à manipuler. Par ailleurs, il est possible de déposer sur l'enveloppe de protection une couche de colle sans risque de contact avec la membrane d'encapsulation de l'élément d'isolation sous vide.

Le surmoulage d'une enveloppe de protection rigide sur la membrane d'encapsulation souple de l'élément d'isolation sous vide limite donc le risque de détérioration de la membrane, ce qui permet de réaliser un panneau de carrosserie présentant de bonnes propriétés thermiques d'isolation et de bonnes propriétés mécaniques. En outre, avec le surmoulage de l'enveloppe de protection, on évite la présence d'espaces ou de cavités emplies d'air entre ladite enveloppe et l'élément d'isolation sous vide. On limite ainsi le risque de vibrations de l'élément d'isolation à l'intérieur de l'enveloppe de protection pouvant dégrader ledit élément lors du roulage du véhicule. Ceci favorise le maintien au cours du temps de bonnes propriétés d'isolation thermique.

Par ailleurs, dans une carrosserie frigorifique, il est fréquent de fixer des barres ou rails d'arrimage pour éviter un déplacement des marchandises stockées à l'intérieur de l'espace de chargement, ou encore des systèmes de penderie à viande, des éclairages, des tubes pour le passage de câbles électriques, etc. Au niveau des modules de carrosserie sur lesquels de tels moyens doivent être fixés, il est possible de prévoir un positionnement de l'élément d'isolation à l'intérieur de l'enveloppe de protection de façon à ce qu'il soit décalé vers l'intérieur ou vers l'extérieur. Dans ce dernier cas, on accroît la distance séparant l'élément d'isolation de la face de l'enveloppe de protection située du côté de l'espace intérieur de chargement. Ceci permet de limiter le risque de détérioration de la membrane d'encapsulation du ou des éléments d'isolation sous vide lors de la fixation de ces moyens extérieurs. Dans ce but, il est également possible d'usiner localement l'enveloppe de protection du ou des modules afin de permettre la mise en place d'inserts de fixation.

De préférence, l'enveloppe de protection est réalisée dans un matériau plus rigide que le matériau de l'âme de la membrane d'encapsulation d'isolation sous vide.

Le module de carrosserie hybride unitaire présente une tenue mécanique et une résistance aux chocs accrues par rapport à celles de l'élément d'isolation sous vide pris isolément. L'enveloppe de protection a une fonction de rigidification ou de renfort du module de carrosserie. Le module peut ainsi être utilisé pour fabriquer un panneau de carrosserie présentant une bonne tenue mécanique. L'épaisseur de l'enveloppe de protection rigide surmoulée sur l'élément d'isolation souple peut aisément être modifiée.

Avantageusement, l'enveloppe de protection est réalisée dans un matériau isolant thermiquement. On limite ainsi la formation de pont thermique entre l'élément d'isolation sous vide et l'extérieur.

Dans un mode de réalisation, l'enveloppe de protection est réalisée dans un matériau thermodurcissable. De préférence, l'enveloppe de protection comprend du polyuréthane.

Le module peut comprendre une pluralité d'éléments d'isolation sous vide et une enveloppe de protection commune à l'intérieur de laquelle sont entièrement noyés lesdits éléments. Il est possible d'utiliser l'espace séparant deux modules adjacents pour prévoir la fixation de barres ou rails d'arrimage, de glissières, etc., la réalisation d'usinage ou encore une découpe en cas de maintenance.

Dans un mode de réalisation, le ou les éléments d'isolation sous vide comprennent une âme se présentant sous la forme d'une plaque réalisée dans un matériau isolant thermiquement, pouvant par exemple être à pores ouverts. Avantageusement, la membrane d'encapsulation est étanche aux gaz, notamment à l'air et à la vapeur.

L'invention concerne également un panneau de carrosserie pour véhicule frigorifique, notamment pour véhicule routier de transport de marchandises, comprenant une pluralité de modules de carrosserie tels que définis précédemment et alignés longitudinalement les uns relativement aux autres.

Dans un mode de réalisation, le panneau de carrosserie comprend des couches de revêtement recouvrant au moins en partie les modules de carrosserie. Les couches de revêtement peuvent avantageusement former un enrobage pour chacun des modules de carrosserie.

Dans un mode de réalisation, le panneau de carrosserie comprend deux couches de finition opposées.

L'invention concerne encore une carrosserie frigorifique pour véhicule, notamment pour véhicule routier de transport de marchandises, comprenant un espace intérieur de chargement délimité par des parois formant des flancs verticaux, un plancher et un plafond, dans laquelle au moins une desdites parois comprend un panneau de carrosserie tel que défini précédemment.

L'invention concerne également un procédé de fabrication d'un module de carrosserie tel que défini précédemment, comprenant :
- une première étape au cours de laquelle l'élément d'isolation sous vide est positionné à l'intérieur d'une cavité d'un moule de fabrication,
- une seconde étape au cours de laquelle le matériau polymère de l'enveloppe de protection est introduit dans la cavité du moule de fabrication de manière à recouvrir entièrement la membrane d'encapsulation de l'élément d'isolation sous vide,
- une troisième étape de polymérisation du matériau polymère, et
- une quatrième étape de démoulage du module de carrosserie.

Dans un mode de mise en oeuvre, l'élément d'isolation sous vide est calé à l'intérieur de la cavité du moule de fabrication en position horizontale. On entend par « position horizontale », la position de l'élément d'isolation sous vide dans laquelle ses faces principales s'étendent horizontalement. Alternativement, l'élément d'isolation sous vide peut être calé à l'intérieur de la cavité du moule en position verticale. Dans un mode de mise en oeuvre, le matériau polymère de l'enveloppe de protection est injecté dans la cavité du moule de fabrication. Dans une variante de mise en oeuvre, le matériau polymère peut être déposé sur l'élément d'isolation.

Dans un mode de réalisation, un moule de fabrication d'un module de carrosserie tel que défini précédemment comprend au moins deux parties formant entre elles une cavité délimitant la forme extérieure dudit module de carrosserie à obtenir, et des moyens de maintien de l'élément d'isolation sous vide à l'intérieur de la cavité avant surmoulage de l'enveloppe de protection. Les moyens de maintien sont réglables de manière à pouvoir modifier la position de l'élément d'isolation sous vide à l'intérieur de la cavité du moule.

La présente invention sera mieux comprise à l'étude de la description détaillée de modes de réalisation pris à titre d'exemples nullement limitatifs et illustrés par les dessins annexés, sur lesquels :
- la figure 1 est une vue de côté d'une carrosserie frigorifique selon l'invention,
- la figure 2 est une vue en coupe selon l'axe II-II de la figure 1,
- la figure 3 est une vue en perspective d'un module de la carrosserie frigorifique des figures 1 et 2 selon un premier mode de réalisation de l'invention,
- la figure 4 est une vue en coupe selon l'axe IV-IV de la figure 3,
- les figures 5 à 8 sont des vues schématiques en perspective d'un moule de fabrication du module des figures 3 et 4, et
- la figure 9 est une vue en perspective d'un module de la carrosserie frigorifique des figures 1 et 2 selon un second mode de réalisation de l'invention.

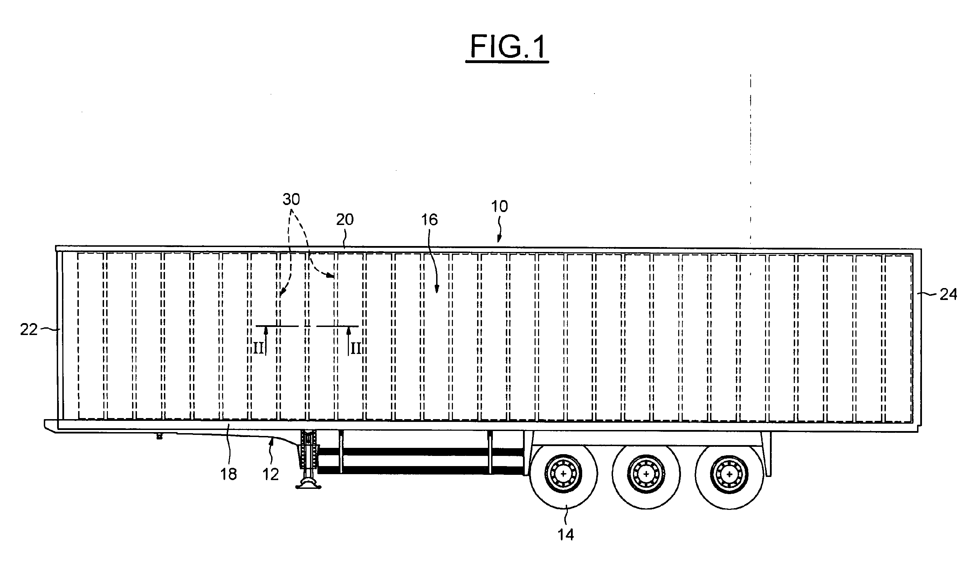

Sur la figure 1, on a représenté une carrosserie frigorifique, référencée 10 dans son ensemble, montée sur un châssis 12 de véhicule de transport routier s'étendant longitudinalement et soutenu par des roues 14.

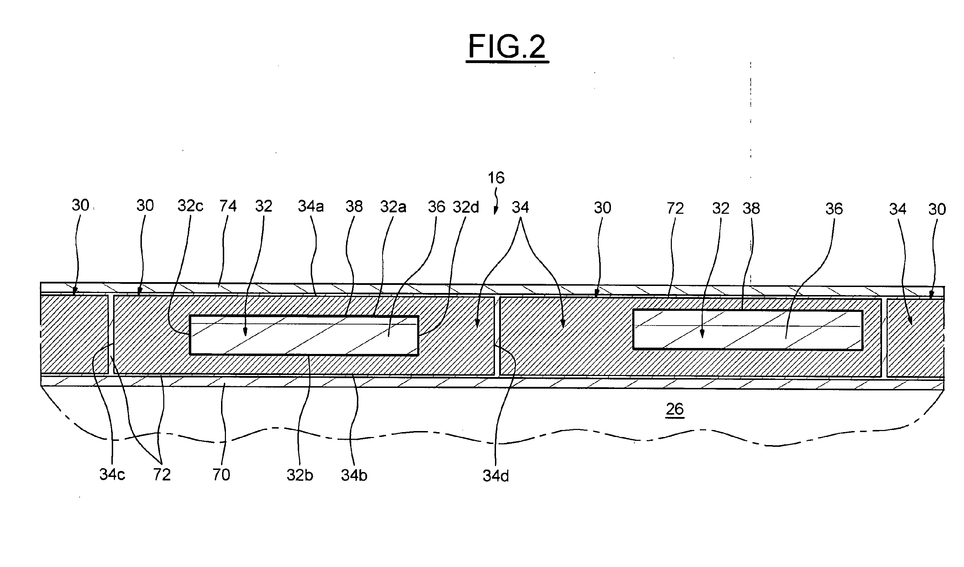

La carrosserie 10 comprend deux flancs 16 verticaux opposés, un plancher 18, un plafond 20, une face avant 22 et une porte arrière 24 assemblés entre eux pour délimiter un espace de chargement 26 intérieur qui est visible en partie à la figure 2.

Comme illustré sur cette figure, le flanc 16 comprend une pluralité de modules 30 de carrosserie alignés longitudinalement et assemblés les uns relativement aux autres comme cela sera décrit plus en détail par la suite. Les modules 30 de carrosserie se présentent sous la forme de panneaux de forme générale parallélépipédique à section rectangulaire.

Chaque module 30 de carrosserie comprend un panneau 32 d'isolation sous vide et une enveloppe 34 de protection extérieure surmoulée sur ledit panneau. L'enveloppe 34 de protection recouvre entièrement le panneau 32 d'isolation de manière à ce que ledit panneau soit entièrement noyé à l'intérieur de l'enveloppe.

Le panneau 32 d'isolation comprend un noyau ou âme 36 et une membrane 38 d'encapsulation enveloppant l'âme et étanche aux gaz, notamment à l'air et à la vapeur. Dans le mode de réalisation illustré le panneau 32 d'isolation sous vide se présente sous la forme d'une plaque souple parallélépipédique à section rectangulaire. Il comprend deux faces 32a, 32b principales opposées et deux chants 32c, 32d opposés transversaux reliant lesdites faces.

L'âme 36 est réalisée dans un matériau isolant thermiquement et comprend avantageusement une structure à pores ouverts. L'âme 36 peut par exemple être constituée de mousse de polystyrène, de polyuréthane, d'aérogel, de silice, etc. L'âme 36 est encapsulée dans la membrane 38 à pression nulle ou à faible pression.

La membrane 38 d'encapsulation recouvrant l'âme 36 peut par exemple être réalisée en polyester, en polyéthylène, en aluminium ou tout autre matériau approprié permettant de former une barrière étanche aux gaz. Le panneau 32 d'isolation est mis sous vide par évacuation de l'air emprisonné dans l'âme 36 de manière à réduire la conductivité thermique du panneau. Pour plus de détails sur les matériaux pouvant être utilisés et sur les procédés de fabrication des panneaux d'isolation sous vide, on pourra par exemple se référer aux brevets US-B2-6,863,949 et EP-B1-1 265 746.

Pour accroître la performance et la longévité du panneau 32 d'isolation sous vide, un dessiccateur (non représenté) peut être ajouté à l'intérieur de l'âme 36 pour absorber la vapeur d'eau et les gaz atmosphériques résiduels et/ou s'infiltrant à l'intérieur de la membrane 38.

Comme indiqué précédemment, l'enveloppe 34 de protection recouvre en totalité le panneau 32 d'isolation sous vide pour qu'il soit entièrement noyé à l'intérieur de ladite enveloppe. L'enveloppe 34 de protection est réalisée dans un matériau plus rigide que le matériau de la membrane 38 d'encapsulation de manière à obtenir un enrobage protégeant le panneau 32 d'isolation en cas de chocs, notamment contre les risques de détérioration de ladite membrane, lors de l'assemblage des différents éléments constituant le flanc 16 et lors de l'utilisation du véhicule. L'enveloppe 34 de protection est également réalisée dans un matériau plus rigide que celui de l'âme 36 pour obtenir un module 30 de carrosserie présentant une tenue mécanique accrue par rapport à celle du panneau 32 d'isolation pris isolément. L'enveloppe 34 de protection est avantageusement réalisée dans un matériau thermodurcissable, par exemple du polyuréthane. Le polyuréthane a notamment pour avantage de pouvoir être facilement moulé sur le panneau 32 d'isolation sous vide. En outre, le polyuréthane présente de bonnes propriétés d'isolation thermique, ce qui limite les phénomènes de ponts thermiques entre le panneau 32 d'isolation sous vide et l'extérieur du module 30 de carrosserie.

L'enveloppe 34 de protection présente une forme générale parallélépipédique à section rectangulaire et comprend deux faces 34a, 34b principales opposées et deux chants 34c, 34d opposés transversaux reliant lesdites faces. Les faces 34a, 34b et les chants 34c, 34d s'étendent parallèlement aux faces 32a, 32b et aux chants 32c, 32d du panneau 32 d'isolation sous vide, respectivement.

Au niveau du module 30 de carrosserie illustré sur la partie gauche de la figure 2, les épaisseurs de l'enveloppe de protection 34 recouvrant les faces 32a, 32b principales du panneau 32 d'isolation sous vide sont égales entre elles. Les épaisseurs de l'enveloppe 34 recouvrant les chants 32c, 32d dudit panneau sont égales entre elles en étant supérieures aux épaisseurs de matière recouvrant les faces 32, 32b, ici dans un rapport de quatre à un.

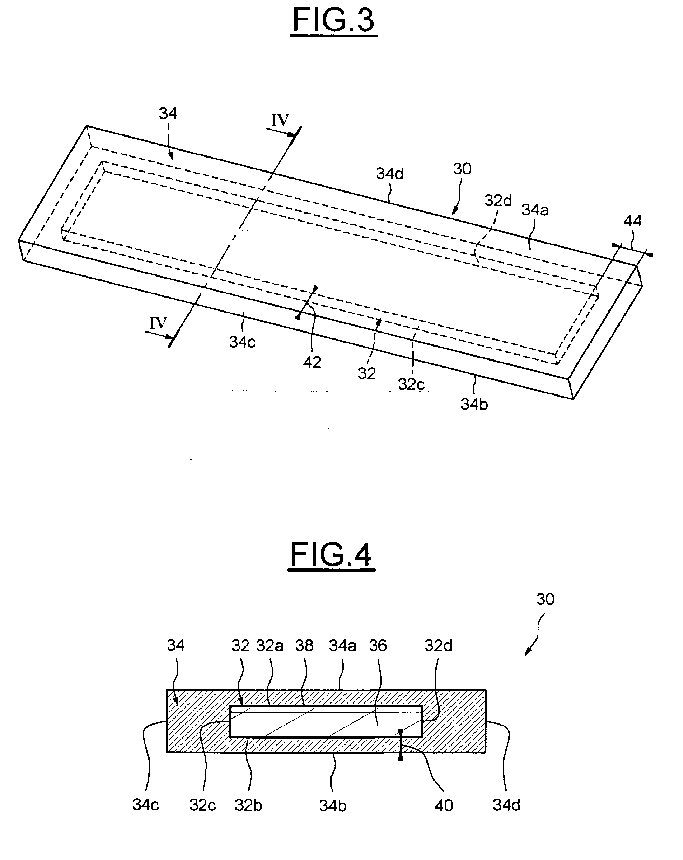

Comme cela ressort également des figures 3 et 4 illustrant ce module 30 de carrosserie, la distance 40 séparant la face principale 32b du panneau 32 d'isolation sous vide et la face principale 34b correspondante de l'enveloppe 34 de protection est donc réduite par rapport à la distance 42 séparant le chant 32c de grand côté du panneau 32 d'isolation et le chant 34c correspondant de l'enveloppe 34 de protection. La distance 44 séparant le chant de petit côté du panneau 32 et le chant correspondant de l'enveloppe de protection est ici sensiblement égale à la distance 42. Le panneau 32 d'isolation sous vide de ce module 30 de carrosserie est centré à l'intérieur de l'enveloppe 34 de protection.

En conservant un même encombrement global du module 30 de carrosserie, il est possible de prévoir une disposition du panneau 32 d'isolation sous vide à l'intérieur de l'enveloppe 34 de protection différente de celle précédemment décrite. En effet, la position finale du panneau 32 d'isolation à l'intérieur de l'enveloppe 34 de protection après surmoulage dépend de la position dudit panneau à l'intérieur du moule de fabrication associé avant l'étape de surmoulage. A titre illustratif, pour le module 30 de carrosserie illustré sur la partie droite de la figure 2, le panneau 32 d'isolation sous vide est notamment décentré dans l'enveloppe 34 de protection de manière à accroître la distance séparant la face principale du panneau 32 et la face principale correspondante de l'enveloppe 34 de protection située du côté de l'espace de chargement 26 intérieur.

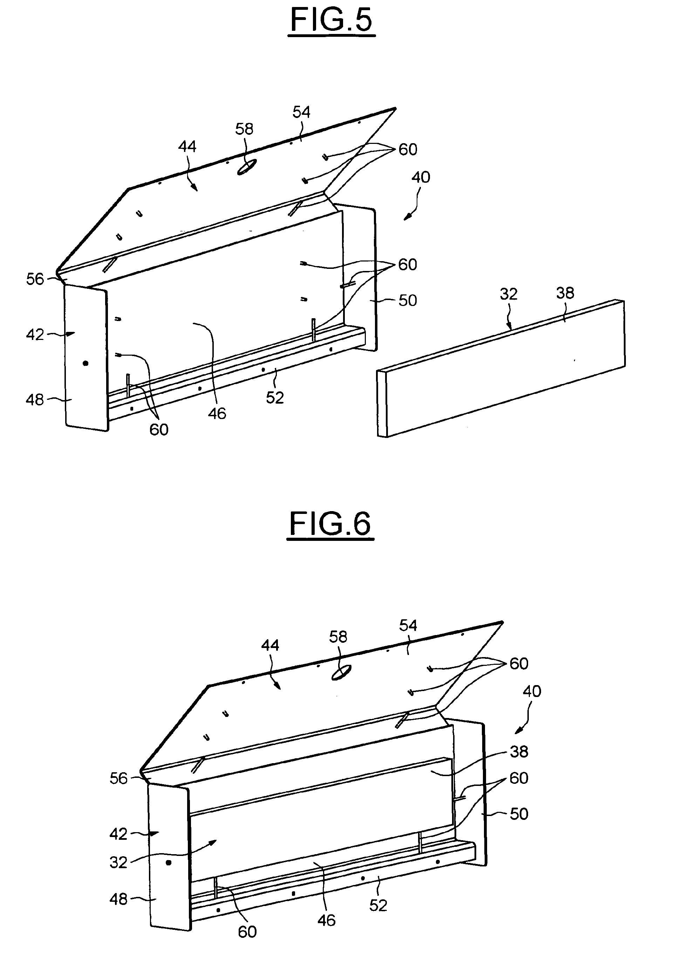

Les figures 5 et 6 représentent un moule 40 de fabrication pouvant être utilisé pour l'obtention des modules 30 de carrosserie. Le moule 40 est représenté dans une position supposée verticale. Il comprend une partie fixe 42 et une partie mobile 44 montée à rotation sur la partie fixe autour d'un axe horizontal. Dans une position fermée du moule 40, les parties fixe 42 et mobile 44 délimitent la forme extérieure du module 30 de carrosserie.

La partie fixe 42 comprend une paroi de fond 46 verticale prolongée à chaque extrémité par des joues 48, 50 latérales, et un rebord 52 prolongeant horizontalement l'extrémité inférieure de la paroi de fond 46 et se raccordant auxdites joues latérales. La partie mobile 44 comprend une paroi 54 principale et un rebord 56 prolongeant l'extrémité supérieure de ladite paroi 54 et permettant l'articulation de la partie mobile à l'extrémité supérieure de la partie fixe 42. Le rebord 56 s'étend transversalement entre les joues 48, 50 de la partie fixe. Dans une position fermée du moule 40, la paroi 54 principale vient en regard de la paroi de fond 46 et en appui contre les joues 48, 50 et le rebord 52 de la partie fixe. Un orifice 58 est prévu dans l'épaisseur de la paroi 54 principale de la partie mobile pour permettre l'injection du matériau polymère destiné à recouvrir entièrement le panneau 32 d'isolation pour former l'enveloppe 34 de protection.

Pour assurer le maintien en position du panneau 32 d'isolation à l'intérieur du moule 40 de fabrication avant le surmoulage de l'enveloppe 34 de protection, une pluralité d'aiguilles 60 de calage sont ici fixées sur les parties fixe 42 et mobile 44. Dans le mode de réalisation illustré, quatre aiguilles 60 sont fixées sur la paroi de fond 46 et la paroi 54 principale de manière à venir en appui contre les faces principales opposées du panneau 32 d'isolation sous vide. Deux aiguilles 60 de calage sont disposées au niveau de chaque rebord 52, 56 de manière à venir appuyer contre les chants de grand côté opposés du panneau 32 d'isolation sous vide, et une aiguille 60 est prévue sur chaque joue 48, 50 de manière à venir appuyer contre les chants de petit côté opposés dudit panneau. Les aiguilles 60 de calage sont fixées sur les parties fixe 42 et mobile 44 de façon réversible, par exemple par des vérins pneumatiques, des vérins électriques ou encore des vis démontables, de manière qu'après surmoulage de l'enveloppe 34 de protection sur le panneau 32 d'isolation sous vide et sur les aiguilles 60 de calage, celles-ci puissent être désolidarisées du moule 40. La dimension des aiguilles 60 de calage est choisie selon la position finale souhaitée du panneau 32 d'isolation sous vide à l'intérieur de l'enveloppe 34 de protection une fois surmoulée.

Le nombre d'aiguilles 60 de calage et leur disposition sont donnés uniquement à titre illustratif. Alternativement, il pourrait être possible de prévoir un nombre différent d'aiguilles de calage ou encore d'autres moyens pour assurer le maintien en position du panneau 32 d'isolation sous vide à l'intérieur du moule 40.

Afin de pouvoir aisément modifier la position du panneau 32 d'isolation à l'intérieur du moule, dans une variante de réalisation, il est possible de prévoir des aiguilles de calage réglables et déplaçables par rapport aux parties fixe 42 et mobile 44, par exemple des vis ou des vérins. Dans ce cas, il est envisageable de polir la surface extérieure de ces moyens de façon à faciliter leur extraction après surmoulage.

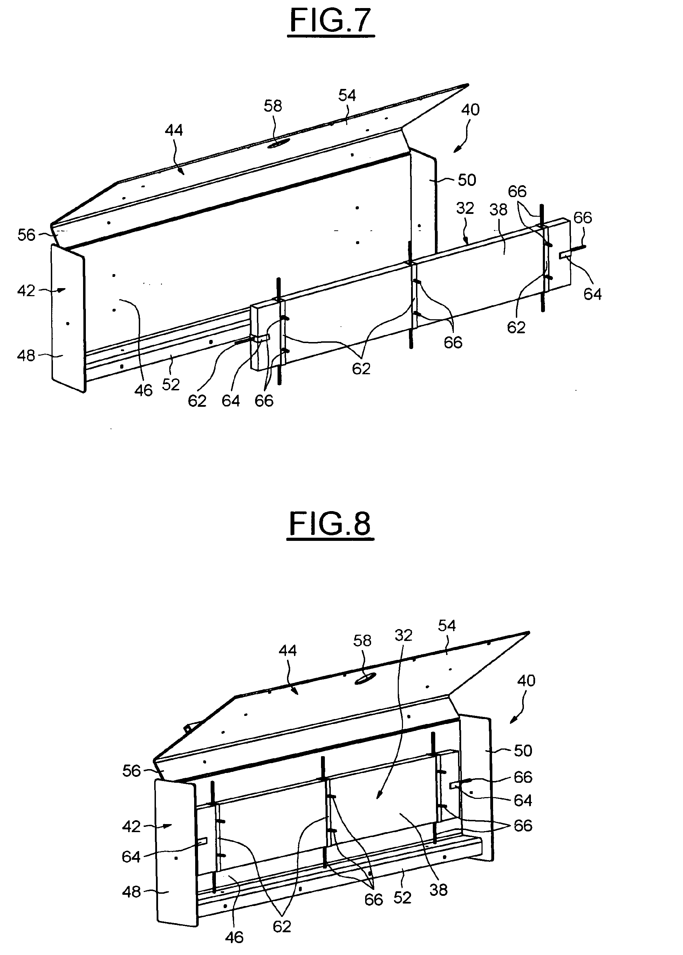

Dans la variante de réalisation illustrée aux figures 7 et 8, sur lesquelles les éléments identiques portent les mêmes références, le maintien en position du panneau 32 d'isolation sous vide à l'intérieur du moule 40 s'effectue par l'intermédiaire de trois colliers 62 enserrant la membrane 38 d'encapsulation du panneau 32 d'isolation sous vide et de deux brides 64 en U montées chacune sur un des chants de petit côté de la membre 38. Sur les colliers 62 et les brides 64 sont fixées des aiguilles 66 de calage, destinées à venir en appui contre les parties fixe 42 et mobile 44 du moule pour le maintien du panneau 32 d'isolation à l'intérieur du moule 40.

Le surmoulage de l'enveloppe 34 de protection du module de carrosserie s'effectue ici dans une position verticale du panneau 32 d'isolation sous vide. Alternativement, il pourrait être possible de prévoir un surmoulage de l'enveloppe 34 de protection dans une position horizontale du panneau d'isolation sous vide. Dans ce cas, le matériau polymère de l'enveloppe 34 de protection peut être injecté ou déposé dans le moule de fabrication associé.

Pour fabriquer un panneau de carrosserie formant le flanc 16 par assemblage de modules 30 de carrosserie on procède de la manière suivante. On utilise un support horizontal dont la dimension est au moins égale à la dimension du flanc 16 à fabriquer. Dans un premier temps, on enduit le support de cire synthétique afin de favoriser le démoulage ultérieur du flanc. On dépose ensuite sur la cire une couche de finition 70 polymérisable (figure 2), puis une couche de revêtement 72 polymérisable comprenant des fibres de verre sur la couche de finition. Les modules 30 de carrosserie sont ensuite appliqués contre cette couche de revêtement 72 de manière à être alignés et disposés au voisinage immédiat les uns des autres en laissant subsister un léger interstice entre deux modules immédiatement successifs. Les modules 30 de carrosserie sont disposés de manière à ce que les chants de grand côté des enveloppes 34 de protection soient parallèles les uns par rapport aux autres en s'étendant perpendiculairement à une direction longitudinale du flanc 16 à fabriquer. La dimension des chants de grand côté des enveloppes 34 correspond à la hauteur du flanc 16 à fabriquer. De nouvelles couches de revêtement 72 polymérisables sont ensuite déposées de manière à enrober entièrement chacun des modules 30 de carrosserie. Une couche de finition 74 polymérisable est ensuite déposée sur les couches de revêtement 72 du côté opposé à la couche de finition 70. L'assemblage ainsi obtenu est ensuite mis sous presse jusqu'au durcissement des couches. Après démoulage on obtient le flanc 16 de la carrosserie frigorifique.

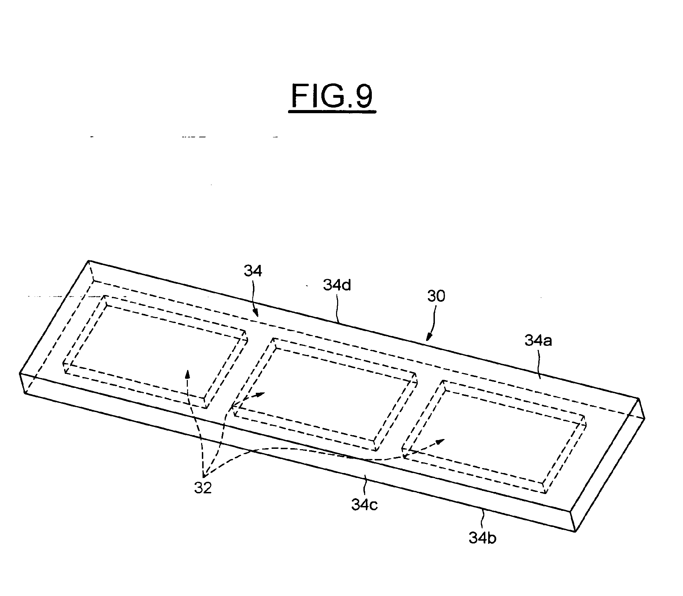

Dans le mode de réalisation précédemment décrit, un unique panneau 32 d'isolation sous vide de grande dimension est utilisé pour la fabrication d'un module 30 de carrosserie. En variante, il est également possible de prévoir une pluralité de panneaux d'isolation sous vide de dimension réduite sur lesquels est surmoulée une enveloppe de protection 34 commune comme illustrée sur la variante de réalisation de la figure 9 sur laquelle les éléments identiques portent les mêmes références. Dans cette variante de réalisation, le module 30 de carrosserie comprend trois panneaux d'isolation sous vide espacés les uns par rapport aux autres. Il est possible d'utiliser l'espace séparant deux modules adjacents pour prévoir la fixation de barres ou rails d'arrimage, de glissières, etc., la réalisation d'usinage ou encore une découpe en cas de maintenance. Bien entendu, le nombre de panneaux d'isolation sous vide peut être différent, par exemple égal à deux ou supérieur à trois. La position des panneaux 32 d'isolation à l'intérieur de l'enveloppe 34 de protection illustrée sur cette figure n'est nullement limitative et d'autres positions des panneaux peuvent bien entendu être envisagées.

Pour la fabrication du flanc 16, il est possible de combiner différents types de modules de carrosserie, à savoir des modules comprenant un unique panneau d'isolation sous vide, une pluralité de panneaux d'isolation sous vide et une enveloppe de protection commune, et des modules dépourvus de panneaux d'isolation sous vide.

Dans les exemples précédemment décrits, les modules de carrosserie sont utilisés pour la fabrication d'un des flancs verticaux de la carrosserie. Bien entendu, l'autre flanc vertical, et/ou le plancher, et/ou le plafond, et/ou la face avant, et/ou la porte arrière formant les parois de la carrosserie frigorifique peuvent également être fabriqués à partir de tels modules élémentaires de carrosserie.

Dans les exemples de réalisation décrits, les modules sont utilisés pour la fabrication d'une carrosserie frigorifique. Cependant, les modules pourraient également être utilisés dans d'autres applications, par exemple pour la construction et l'isolation de bâtiment.

## Revendications

1. Module de carrosserie pour véhicule frigorifique, notamment pour véhicule routier de transport de marchandises, comprenant au moins un élément d'isolation sous vide (32) pourvu d'une âme (36) et d'une membrane d'encapsulation (38) de ladite âme, **caractérisé en ce qu'**il comprend en outre une enveloppe de protection (34) surmoulée sur la membrane d'encapsulation de manière à noyer entièrement l'élément d'isolation sous vide, l'enveloppe de protection (34) étant réalisée dans un matériau plus rigide que le matériau de la membrane d'encapsulation (38) de l'élément d'isolation sous vide.

2. Module selon la revendication 1, dans lequel l'enveloppe de protection (34) est réalisée dans un matériau plus rigide que le matériau de l'âme (36) de l'élément d'isolation sous vide.

3. Module selon les revendications 1 ou 2, dans lequel l'enveloppe de protection est réalisée dans un matériau isolant thermiquement.

4. Module selon l'une quelconque des revendications précédentes, dans lequel l'enveloppe de protection est réalisée dans un matériau thermodurcissable.

5. Module selon la revendication 4, dans lequel l'enveloppe de protection comprend du polyuréthane.

6. Module selon l'une quelconque des revendications précédentes, comprenant une pluralité d'éléments d'isolation sous vide (32) et une enveloppe de protection (34) commune à l'intérieur de laquelle sont entièrement noyés lesdits éléments.

7. Module selon l'une quelconque des revendications précédentes, dans lequel l'âme (36) se présente sous la forme d'une plaque réalisée dans un matériau isolant thermiquement, la membrane d'encapsulation (38) étant étanche aux gaz.

8. Panneau de carrosserie pour véhicule frigorifique, notamment pour véhicule routier de transport de marchandises, comprenant une pluralité de modules (30) de carrosserie selon l'une quelconque des revendications précédentes alignés longitudinalement les uns relativement aux autres.

9. Panneau selon la revendication 8, comprenant des couches de revêtement (72) formant un enrobage pour chacun des modules de carrosserie.

10. Panneau selon les revendications 8 ou 9, comprenant deux couches de finition (72, 74) opposées.

11. Carrosserie frigorifique pour véhicule, notamment pour véhicule routier de transport de marchandises, comprenant un espace intérieur de chargement délimité par des parois formant des flancs verticaux, un plancher et un plafond, dans laquelle au moins une desdites parois comprend un panneau de carrosserie selon l'une quelconque des revendications 8 à 10.

12. Procédé de fabrication d'un module de carrosserie selon l'une quelconque des revendications 1 à 7, **caractérisé en ce qu'**il comprend :
- une première étape au cours de laquelle l'élément d'isolation sous vide est positionné à l'intérieur d'une cavité d'un moule de fabrication,
- une seconde étape au cours de laquelle le matériau polymère de l'enveloppe de protection est introduit dans la cavité du moule de fabrication de manière à recouvrir entièrement la membrane d'encapsulation de l'élément d'isolation sous vide,
- une troisième étape de polymérisation du matériau polymère, et
- une quatrième étape de démoulage du module de carrosserie.

13. Procédé selon la revendication 12, dans lequel l'élément d'isolation sous vide est calé à l'intérieur de la cavité du moule de fabrication par l'intermédiaire de moyens de maintien dont la position est réglable à l'intérieur de ladite cavité.

## Claims

1. Body module for refrigerated vehicle, notably for goods transport road vehicle, comprising at least one vacuum insulation element (32) provided with a core (36) and a membrane (38) encapsulating said core, **characterized in that** it also comprises a protective casing (34) overmoulded on the encapsulation membrane so as to entirely embed the vacuum insulation element, the protective casing (34) being produced in a material that is more rigid than the material of the encapsulation membrane (38) of the vacuum insulation element.

2. Module according to Claim 1, in which the protective casing (34) is produced in a material that is more rigid than the material of the core (36) of the vacuum insulation element.

3. Module according to Claims 1 or 2, in which the protective casing is produced in a thermally insulating material.

4. Module according to any one of the preceding claims, in which the protective casing is produced in a thermosetting material.

5. Module according to Claim 4, in which the protective casing comprises polyurethane.

6. Module according to any one of the preceding claims, comprising a plurality of vacuum insulation elements (32) and a common protective casing (34) inside which said elements are entirely embedded.

7. Module according to any one of the preceding claims, in which the core (36) takes the form of a plate produced in a thermally insulating material, the encapsulation membrane (38) being gas-tight.

8. Body panel for refrigerated vehicle, notably for goods transport road vehicle, comprising a plurality of body modules (30) according to any one of the preceding claims aligned longitudinally relative to one another.

9. Panel according to Claim 8, comprising covering layers (72) forming a covering for each of the body modules.

10. Panel according to Claims 8 or 9, comprising two opposing finishing layers (72, 74).

11. Refrigerated body for vehicle, notably goods transport road vehicle, comprising an internal loading space delimited by walls forming vertical flanks, a floor and a roof, in which at least one of said walls comprises a body panel according to any one of Claims 8 to 10.

12. Method for manufacturing a body module according to any one of Claims 1 to 7, **characterized in that** it comprises:
- a first step during which the vacuum insulation element is positioned inside a cavity of a manufacturing mould,
- a second step during which the polymer material of the protective casing is introduced into the cavity of the manufacturing mould so as to entirely cover the encapsulation membrane of the vacuum insulation element,
- a third step of polymerization of the polymer material, and
- a fourth step of stripping the body module from the mould.

13. Method according to Claim 12, in which the vacuum insulation element is fixed inside the cavity of the manufacturing mould using securing means, the position of which can be adjusted inside said cavity.

## Patentansprüche

1. Karosseriemodul für Kühlfahrzeug, insbesondere für Gütertransportfahrzeug, das wenigstens ein Isolierelement unter Vakuum (32), das mit einer Seele (36) und einer Kapselungsmembran (38) der Seele versehen ist, aufweist, **dadurch gekennzeichnet, dass** es ferner eine Schutzhülle (34) aufweist, die auf der Kapselungsmembran derart abgeformt ist, dass das Isolierelement unter Vakuum komplett eingelassen ist, wobei die Schutzhülle (34) aus einem Werkstoff hergestellt ist, der starrer ist als der Werkstoff der Kapselungsmembran (38) des Isolierelements unter Vakuum.

2. Modul nach Anspruch 1, bei dem die Schutzhülle (34) aus einem Werkstoff hergestellt ist, der starrer ist als der Werkstoff der Seele (36) des Isolierelements unter Vakuum.

3. Modul nach den Ansprüchen 1 oder 2, bei dem die Schutzhülle aus einem thermisch isolierenden Werkstoff hergestellt ist.

4. Modul nach einem der vorhergehenden Ansprüche, bei dem die Schutzhülle aus einem wärmehärtbaren Werkstoff hergestellt ist.

5. Modul nach Anspruch 4, bei dem die Schutzhülle Polyurethan enthält.

6. Modul nach einem der vorhergehenden Ansprüche, das eine Vielzahl von Isolierelementen unter Vakuum (32) und eine gemeinsame Schutzhülle (34), in deren Inneren die Elemente komplett eingelassen sind, aufweist.

7. Modul nach einem der vorhergehenden Ansprüche, bei dem die Seele (36) die Form einer Platte hat, die aus einem thermisch isolierenden Werkstoff hergestellt ist, wobei die Kapselungsmembran (38) gasdicht ist.

8. Karosserietafel für Kühlfahrzeug, insbesondere für Gütertransportfahrzeug, das eine Vielzahl von Karosseriemodulen (30) nach einem der vorhergehenden Ansprüche aufweist, die längs zueinander gefluchtet sind.

9. Tafel nach Anspruch 8, die Beschichtungsschichten (72) aufweist, die einen Belag für jedes der Karosseriemodule bilden.

10. Tafel nach den Ansprüchen 8 oder 9, die zwei gegenüberliegende Endfertigungsschichten (72, 74) aufweist.

11. Kühlkarosserie für Fahrzeug, insbesondere für Gütertransportfahrzeug, die einen Füllungsinnenraum, der durch Wände abgegrenzt ist, die vertikale Flanken bilden, einen Fußboden und eine Decke aufweist, bei der wenigstens eine der Wände eine Karosserietafel nach einem der Ansprüche 8 bis 10 aufweist.

12. Herstellungsverfahren eines Karosseriemoduls nach einem der Ansprüche 1 bis 7, **dadurch gekennzeichnet, dass** es Folgendes aufweist:
- einen ersten Schritt, in dessen Verlauf das Isolierelement unter Vakuum im Inneren eines Hohlraums einer Herstellungsform positioniert wird,
- einen zweiten Schritt, in dessen Verlauf der Polymerwerkstoff der Schutzhülle in den Hohlraum der Herstellungsform so eingeführt wird, dass er die Kapselungsmembran des Isolierelements unter Vakuum komplett abdeckt,
- einen dritten Schritt der Polymerisation des Polymerwerkstoffs und
- einen vierten Schritt des Abformens des Karosseriemoduls.

13. Verfahren nach Anspruch 12, bei dem das Isolierelement unter Vakuum im Inneren des Hohlraums der Herstellungsform über Haltemittel verkeilt ist, deren Position im Inneren des Hohlraums verstellbar ist.
